# EUROPEAN PATENT APPLICATION

(11) **EP 3 323 678 A1**
(43) Date of publication of application: **23.05.2018**
(21) Application number: 16824311.1
(22) Date of filing: 04.07.2016
(51) Int. Cl.: B60R 1/072, B60R 1/06

(54) **VEHICLE VISUAL CONFIRMATION DEVICE**

(30) Priority: 14.07.2015 JP 2015140643; 14.07.2015 JP 2015140644
(71) Applicant: Kabushiki Kaisha Tokai Rika Denki Seisakusho, Ohguchi-cho Niwa-gun Aichi 480-0195 (JP)
(72) Inventor: FUJISAKI, Suguru, Niwa-gun Aichi 480-0195 (JP); YOSHIDA, Shigeki, Niwa-gun Aichi 480-0195 (JP); SAKAMOTO, Masato, Niwa-gun Aichi 480-0195 (JP); MUTO, Hiroyuki, Niwa-gun Aichi 480-0195 (JP); OHASHI, Masatsugu, Niwa-gun Aichi 480-0195 (JP)
(74) Representative: TBK
(86) International application number: PCT/JP2016/069795
(87) International publication number: WO 2017/010331

(57) **Abstract**

At a door mirror device for a vehicle, a covering wall interior that is at a supporting wall interior opens to a vehicle front side of a visor body, and a reinforcement is fixed to the vehicle front side of the visor body, and a bottom wall portion of the reinforcement covers a vehicle front side of a mirror surface adjusting mechanism that is at the covering wall interior. Therefore, in a state in which the reinforcement is not fixed to the vehicle front side of the visor body, the mirror surface adjusting mechanism can be assembled to the covering wall interior from the vehicle front side of the visor body, and the assemblability can be improved.

## Description

### Technical Field

The present invention relates to a viewing device for a vehicle in which a viewing means assists viewing by a vehicle occupant.

### Background Art

In an electric door mirror described in Japanese Patent Application Laid-Open (JP-A) No. 2013-67194, a motor holder of a mirror surface angle adjusting unit is fixed to a partitioning wall of a housing main body, and a mirror is assembled to a pivot plate of the mirror surface angle adjusting unit, and the housing main body accommodates the mirror surface angle adjusting unit and the mirror. Moreover, at the mirror surface angle adjusting unit, the motor holder covers the side of the motor which side is opposite the mirror, and the mirror side of the motor is covered by an inner member. The motor holder slidingly supports the pivot plate and the mirror at the mirror outer peripheral side of the motor.

Here, in such an electric door mirror, it is preferable to be able to improve the assemblability.

### SUMMARY OF INVENTION

### Technical Problem

In view of the above-described circumstances, an object of the present invention is to obtain a viewing device for a vehicle that can improve the assemblability.

### Solution to Problem

A viewing device for a vehicle of a first aspect of the present invention comprises: viewing means for assisting viewing by a vehicle occupant; an operating mechanism which, by being operated, tilts the viewing means; and a supporting body including a supporting portion, which slidably supports the viewing means at a viewing means outer peripheral side of the operating mechanism, and a covering portion that covers a viewing means side of the operating mechanism.

A viewing device for a vehicle of a second aspect of the present invention comprises: viewing means for assisting viewing by a vehicle occupant; an operating mechanism which, by being operated, tilts the viewing means; and a supporting body that includes a supporting portion, which slidably supports the viewing means at a viewing means outer peripheral side of the operating mechanism, and that enables assembly of the operating mechanism from a side opposite from the viewing means.

A viewing device for a vehicle of a third aspect of the present invention comprises, in the viewing device for a vehicle of the first aspect or the second aspect of the present invention, a retracting mechanism that is assembled to the supporting body from a side opposite from the viewing means, and by which, by being operated, the viewing means is retracted.

A viewing device for a vehicle of a fourth aspect of the present invention comprises, in the viewing device for a vehicle of any one of the first aspect through the third aspect of the present invention, a reinforcing body that is assembled to the supporting body from a side opposite from the viewing means, and that reinforces the supporting body.

A viewing device for a vehicle of a fifth aspect of the present invention comprises, in the viewing device for a vehicle of any one of the first aspect through the fourth aspect of the present invention, a central supporting portion that is provided at the supporting body, and that slidably supports the viewing means at a central side of the viewing means.

A viewing device for a vehicle of a sixth aspect of the present invention comprises, in the viewing device for a vehicle of any one of the first aspect through the fifth aspect of the present invention, a central supporting portion that is provided integrally with an accommodating portion that accommodates the viewing means, and that slidably supports the viewing means at a central side of the viewing means.

In a viewing device for a vehicle of a seventh aspect of the present invention, in the viewing device for a vehicle of the fifth aspect or the sixth aspect of the present invention, a sliding surface, on which the viewing means slides, of the supporting portion and a sliding surface, on which the viewing means slides, of the central supporting portion are spherical surfaces having a same center.

A viewing device for a vehicle of an eighth aspect of the present invention comprises: viewing means for assisting viewing by a vehicle occupant; an operating mechanism which, by being operated, tilts the viewing means; and an accommodating body including an accommodating portion that accommodates the viewing means, and a covering portion that covers a viewing means side of the operating mechanism.

A viewing device for a vehicle of a ninth aspect of the present invention comprises: viewing means for assisting viewing by a vehicle occupant; an operating mechanism which, by being operated, tilts the viewing means; and an accommodating body that accommodates the viewing means, and that enables assembly of the operating mechanism from a side opposite from the viewing means.

A viewing device for a vehicle of a tenth aspect of the present invention comprises, in the viewing device for a vehicle of the eighth aspect or the ninth aspect of the present invention, a retracting mechanism that is assembled to the accommodating body from a side opposite from the viewing means, and by which, by being operated, the viewing means is retracted.

A viewing device for a vehicle of an eleventh aspect of the present invention comprises, in the viewing device for a vehicle of any one of the eighth aspect through the tenth aspect of the present invention, a reinforcing body that is assembled to the accommodating body from a side opposite from the viewing means, and that reinforces the accommodating body.

### Advantageous Effects of Invention

In the viewing device for a vehicle of the first aspect of the present invention, the viewing means assists viewing by the vehicle occupant. Moreover, the viewing means is tilted due to the operating mechanism being operated.

Here, the supporting body includes the supporting portion and the covering portion. The supporting portion slidably supports the viewing means at the viewing means outer peripheral side of the operating mechanism. The covering portion covers the viewing means side of the operating mechanism. Therefore, the number of parts can be reduced, and the assemblability can be improved.

In the viewing device for a vehicle of the second aspect of the present invention, the viewing means assists viewing by the vehicle occupant. Moreover, the viewing means is tilted due to the operating mechanism being operated. Further, the supporting body slidably supports the viewing means at the viewing means outer peripheral side of the operating mechanism.

Here, the supporting body enables assembly of the operating mechanism from the side opposite from the viewing means. Therefore, the assemblability can be improved.

In the viewing device for a vehicle of the third aspect of the present invention, the viewing means is retracted due to the retracting mechanism being operated.

Here, the retracting mechanism is assembled to the supporting body from the side opposite from the viewing means. Therefore, the assemblability can be improved further.

In the viewing device for a vehicle of the fourth aspect of the present invention, the reinforcing body reinforces the supporting body.

Here, the reinforcing body is assembled to the supporting body from the side opposite from the viewing means. Therefore, the assemblability can be improved further.

In the viewing device for a vehicle of the fifth aspect of the present invention, the central supporting portion slidably supports the viewing means at the central side of the viewing means.

Here, the central supporting portion is provided at the supporting body. Therefore, the number of parts can be reduced, and the assemblability can be improved further.

In the viewing device for a vehicle of the sixth aspect of the present invention, the accommodating portion accommodates the viewing means, and the central supporting portion slidably supports the viewing means at the central side of the viewing means.

Here, the central supporting portion is provided integrally with the accommodating portion. Therefore, the number of parts can be reduced, and the assemblability can be improved further.

In the viewing device for a vehicle of the seventh aspect of the present invention, the sliding surface, on which the viewing means slides, of the supporting portion and the sliding surface, on which the viewing means slides, of the central supporting portion are spherical surfaces having the same center. Therefore, tilting of the viewing means can be stabilized.

In the viewing device for a vehicle of the eighth aspect of the present invention, the viewing means assists viewing by the vehicle occupant. Moreover, the viewing means is tilted due to the operating mechanism being operated.

Here, the accommodating body includes the accommodating portion and the covering portion. The accommodating portion accommodates the viewing means, and the covering portion covers the viewing means side of the operating mechanism. Therefore, the number of parts can be reduced, and the assemblability can be improved.

In the viewing device for a vehicle of the ninth aspect of the present invention, the accommodating body accommodates the viewing means, and the viewing means assists viewing by the vehicle occupant. Moreover, the viewing means is tilted due to the operating mechanism being operated.

Here, the supporting body enables assembly of the operating mechanism from the side opposite from the viewing means. Therefore, the assemblability can be improved.

In the viewing device for a vehicle of the tenth aspect of the present invention, the viewing means is retracted due to the retracting mechanism being operated.

Here, the retracting mechanism is assembled to the accommodating body from the side opposite from the viewing means. Therefore, the assemblability can be improved further.

In the viewing device for a vehicle of the eleventh aspect of the present invention, the reinforcing body reinforces the accommodating body.

Here, the reinforcing body is assembled to the accommodating body from the side opposite from the viewing means. Therefore, the assemblability can be improved further.

### BRIEF DESCRIPTION OF DRAWINGS

Fig. 1 is an exploded perspective view that is seen from a vehicle front side and a vehicle transverse direction inner side and shows a door mirror device for a vehicle relating to an embodiment of the present invention.
Fig. 2 is a cross-sectional view that is seen from a vehicle transverse direction outer side and shows main portions of the door mirror device for a vehicle relating to the embodiment of the present invention.
Fig. 3 is a perspective view that is seen from a vehicle rear side and the vehicle transverse direction inner side and shows a visor body of the door mirror device for a vehicle relating to the embodiment of the present invention.

### DESCRIPTION OF EMBODIMENTS

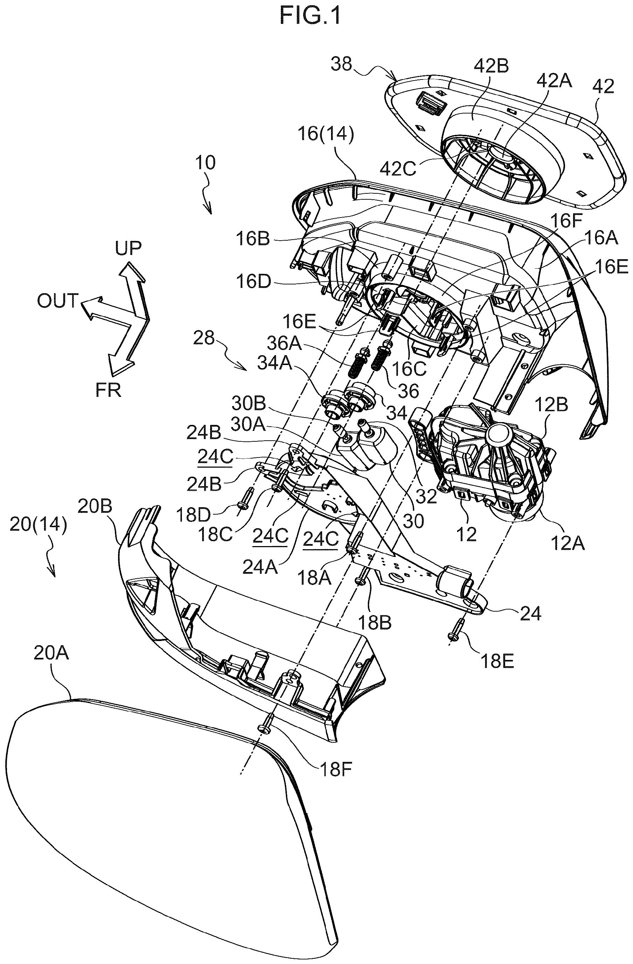

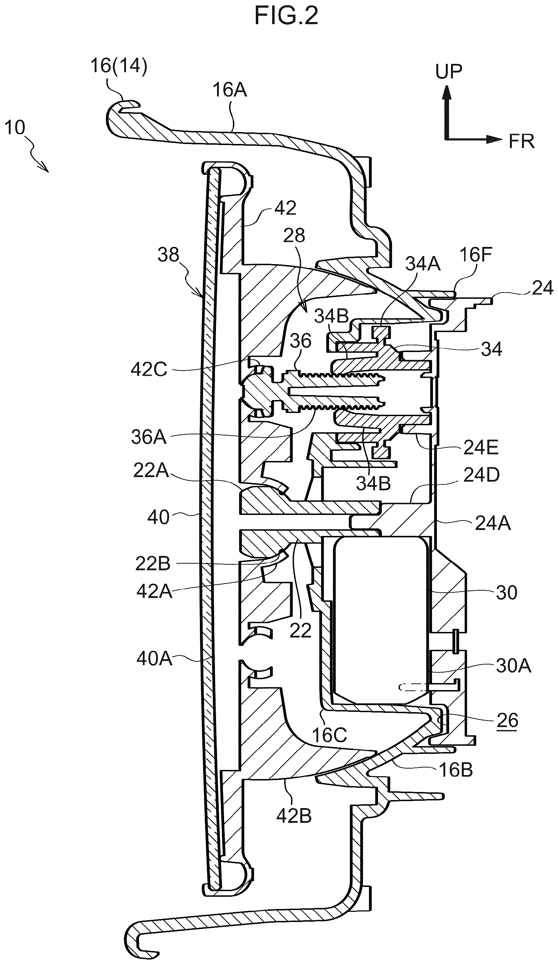

A door mirror device 10 for a vehicle that serves as a viewing device for a vehicle relating to an embodiment of the present invention is shown in Fig. 1 in an exploded perspective view that is seen from the vehicle front side and the vehicle transverse direction inner side (the vehicle left side). Main portions of the door mirror device 10 for a vehicle are shown in Fig. 2 in a cross-sectional view that is seen from the vehicle transverse direction outer side (the vehicle right side). Note that, in the drawings, the vehicle front side is indicated by arrow FR, the vehicle transverse direction outer side is indicated by arrow OUT, and the upper side is indicated by arrow UP.

The door mirror device 10 for a vehicle relating to the present embodiment is supported at the outer side of a door (a front side door, a vehicle body side) of a vehicle.

As shown in Fig. 1, the door mirror device 10 for a vehicle has a retracting mechanism 12. A stand 12A that serves as a supporting member is provided at the retracting mechanism 12. The door mirror device 10 for a vehicle is supported at the door due to the stand 12A being supported at the vehicle front side end of the vertical direction intermediate portion of the door. A rotating body 12B is supported at the stand 12A. The rotating body 12B is rotated around the vertical direction with respect to the stand 12A, due to the retracting mechanism 12 being operated electrically. The rotating body 12B is electrically connected to a control device (not illustrated) that is at the vehicle body side, and the retracting mechanism 12 is electrically operated by control of the control device.

A visor 14, which is made of resin and serves as an outer peripheral body, is supported at the rotating body 12B of the retracting mechanism 12. A visor body 16 that serves as a supporting body and an accommodating body is provided at the visor 14. The rotating body 12B is fixed to the vehicle front side of the vehicle transverse direction inner side end portion of the visor body 16 by fastening of a first screw 18A and a second screw 18B that serve as assembly members, and the like. A visor cover 20 that is shaped as a curved plate and serves as a covering member is assembled via a reinforcement 24 that is described hereinafter to the vehicle front side of the visor body 16. The outer periphery of the visor cover 20 is fit-together with the outer periphery of the visor body 16, and the visor cover 20 covers the vehicle front side of the visor body 16. An upper cover 20A that is at the upper side and a lower cover 20B that is at the lower side are provided at the visor cover 20. The visor cover 20 is structured by the upper cover 20A and the lower cover 20B being assembled together.

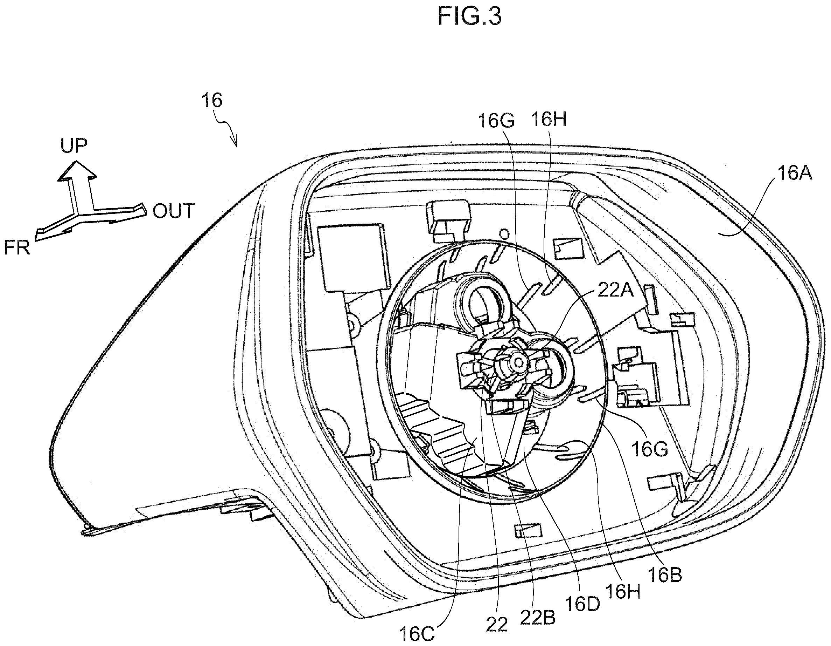

As shown in Fig. 1 through Fig. 3, an accommodating wall 16A, which is substantially shaped as a parallelepiped box and serves as an accommodating portion, is provided at the visor body 16. The interior of the accommodating wall 16A opens to the vehicle rear side.

A supporting wall 16B (a case lower portion) that serves as a supporting portion is provided integrally with the vehicle front side wall (the bottom wall) of the accommodating wall 16A. The supporting wall 16B projects-out toward the vehicle front side and the vehicle rear side of the vehicle front side wall of the accommodating wall 16A. The supporting wall 16B is substantially tubular, and the central axis of the supporting wall 16B is disposed parallel to the vehicle longitudinal direction. The supporting wall 16B is shaped as a spherical wall. The inner diameter dimension of the supporting wall 16B gradually increases toward the vehicle rear side.

Plural supporting projections 16G, which are shaped as elongated plates and serve as supporting regions, are provided integrally with the inner peripheral surface of the supporting wall 16B. The supporting projections 16G project-out from the inner peripheral surface of the supporting wall 16B toward the central side, and projecting end surfaces 16H (sliding surfaces) are shaped as spherical surfaces whose centers are the center of the supporting wall 16B. The plural (three or more) supporting projections 16G are disposed at uniform intervals in the peripheral direction of the supporting wall 16B. A plurality of (two in the present embodiment) the supporting projections 16G are disposed in the central axis direction of the supporting wall 16B (the vehicle longitudinal direction). The plural supporting projections 16G in the central axis direction of the supporting wall 16B are disposed so as to partially overlap one another in the central axis direction of the supporting wall 16B. The supporting projections 16G are disposed at the entirety of the central axis direction of the supporting wall 16B.

A covering wall 16C (a case upper portion) that is shaped as a container and serves as a covering portion is provided at the interior of the supporting wall 16B. The entire periphery of the vehicle front side end of the covering wall 16C is made integral with the entire periphery of the vehicle front side end of the supporting wall 16B. A connecting wall 16D that is shaped as a flat plate is provided integrally between the vehicle front side end of the covering wall 16C and the vehicle front side end of the supporting wall 16B. The connecting wall 16D connects the vehicle front side end of the covering wall 16C and the vehicle front side end of the supporting wall 16B at the portion where the vehicle front side end of the covering wall 16C and the vehicle front side end of the supporting wall 16B are not directly made integral. The interior of the covering wall 16C opens to the vehicle front side of the supporting wall 16B, and, due thereto, the interior of the covering wall 16C opens to the vehicle front side of the accommodating wall 16A.

A predetermined number (four in the present embodiment) of limiting plates 16E, which are shaped as rectangular plates and serve as limiting portions, are provided integrally with the connecting wall 16D. The limiting plates 16E project-out toward the vehicle front side from the connecting wall 16D. The predetermined number of limiting plates 16E are disposed at a substantially uniform interval in the peripheral direction of the supporting wall 16B. The limiting plates 16E are disposed so as to intersect the radial direction of the supporting wall 16B.

A fit-together tube 16F that is cylindrical and serves as a fit-together portion is provided integrally with the outer peripheral surface of the supporting wall 16B at the vehicle longitudinal direction intermediate portion. The fit-together tube 16F projects-out toward the vehicle front side from the supporting wall 16B, and is disposed coaxially with the supporting wall 16B.

A holding tube 22, which is substantially cylindrical and serves as a central supporting portion (a holding portion) is provided integrally with the vehicle rear side wall (the bottom wall) of the covering wall 16C. The holding tube 22 projects-out toward the vehicle front side and the vehicle rear side of the vehicle rear side wall of the covering wall 16C, and is disposed coaxially with the supporting wall 16B. A holding sphere 22A that is substantially spherical is provided at the vehicle rear side end portion of the holding tube 22. The peripheral surface at the vehicle front side portion of the holding sphere 22A is a holding surface 22B (a sliding surface) that is shaped as a spherical surface, and the center thereof coincides with the center of the supporting wall 16B.

The reinforcement 24, which is shaped as an elongated plate and is substantially made of resin and serves as a reinforcing body, is provided at the vehicle front side of the visor body 16 and the rotating body 12B of the retracting mechanism 12. The vehicle transverse direction intermediate portion of the reinforcement 24 is fixed, together with the rotating body 12B, to the visor body 16 by fastening of the first screw 18A and the second screw 18B.

A pair of assembly plates 24B, which are shaped as triangular plates and serve as assembly portions, are provided integrally with the vehicle transverse direction outer side portion of the reinforcement 24. The pair of assembly plates 24B project-out from the reinforcement 24 toward the upper side and the vehicle transverse direction outer side, respectively. At the pair of assembly plates 24B, the vehicle transverse direction outer side portion of the reinforcement 24 is fixed to the visor body 16 by the fastening of a third screw 18C and a fourth screw 18D that serve as assembly members, respectively. The vehicle transverse direction inner side end portion of the reinforcement 24 is fixed to the rotating body 12B by the fastening of a fifth screw 18E that serve as an assembly member.

The rigidity of the reinforcement 24 is high as compared with the rigidity of the visor body 16, and the reinforcement 24 reinforces the visor body 16 and the rotating body 12B. Further, the visor cover 20 (the lower cover 20B) of the visor 14 is fixed to the reinforcement 24 by the fastening of a sixth screw 18F that serves as a fixing member. Due thereto, the above-described visor cover 20 is assembled to the visor body 16 via the reinforcement 24 as described above.

An electrical circuit (not illustrated) is provided at the reinforcement 24. The electrical circuit is electrically connected to a control device.

A bottom wall portion 24A, which is shaped as a circular plate and serves as a closing-off portion, is provided at the vehicle transverse direction outer side portion of the reinforcement 24. A concave portion 26, which is rectangular in cross-section and serves as an insertion portion, is formed at the entire periphery of the outer peripheral portion of the vehicle rear side surface of the bottom wall portion 24A. The bottom wall portion 24A is fit-together with the interior of the fit-together tube 16F of the visor body 16, and the vehicle front side end of the supporting wall 16B of the visor body 16 is inserted in the concave portion 26, and the outer peripheral surface of the supporting wall 16B is fit-together with the outer peripheral surface of the concave portion 26. Due thereto, the bottom wall portion 24A covers and closes-off the vehicle front sides of the supporting wall 16B and the covering wall 16C of the visor body 16.

A predetermined number (four in the present embodiment) of limiting holes 24C that are rectangular and serve as limited portions are formed so as to pass-through the bottom wall portion 24A. The predetermined number of limiting holes 24C are disposed at a substantially uniform interval in the peripheral direction of the bottom wall portion 24A, and are respectively disposed so as to intersect the radial direction of the bottom wall portion 24A. The limiting plates 16E of the visor body 16 are inserted-in (fit-together with) the limiting holes 24C. Due thereto, movement of the bottom wall portion 24A in the peripheral direction and the radial direction with respect to the visor body 16 is limited.

A fit-in pillar 24D that is substantially cylindrical and serves as a fit-in portion is provided integrally with the central portion of the bottom wall portion 24A. The fit-in pillar 24D projects-out toward the vehicle rear side from the bottom wall portion 24A, and is disposed coaxially with the bottom wall portion 24A. The distal end portion of the fit-in pillar 24D has a reduced diameter, and the distal end portion of the fit-in pillar 24D is fit-in the interior of the holding tube 22 of the visor body 16 from the vehicle front side.

A supporting tube 24E that is cylindrical is provided integrally with the upper portion and the vehicle transverse direction outer side portion of the bottom wall portion 24A, at the bottom wall portion 24A radial direction inner sides of the assembly plates 24B. The supporting tube 24E projects-out toward the vehicle rear side from the bottom wall portion 24A, and the central axis thereof is disposed parallel to that of the bottom wall portion 24A.

A mirror surface adjusting mechanism 28 that serves as an operating mechanism is held between the covering wall 16C of the visor body 16 and the bottom wall portion 24A of the reinforcement 24.

A pair of motors 30 that serve as driving means are provided at the mirror surface adjusting mechanism 28. Main body portions 30A of the motors 30 are held in states of being nipped between the covering wall 16C and the bottom wall portion 24A. Output shafts 30B extend-out from the main body portions 30A. Worms 32 that serve as output members are fixed to the output shafts 30B. An electric circuit of the reinforcement 24 is electrically connected to the main body portions 30A. Due to control of the control device, the motors 30 are driven, and the mirror surface adjusting mechanism 28 is electrically operated.

A pair of wheel drives 34, which are substantially cylindrical and are made of resin and serve as transmitting members, are provided at the mirror surface adjusting mechanism 28. The wheel drives 34 are nipped between the covering wall 16C and the bottom wall portion 24A in a state in which the vehicle front side portions thereof are fit-in the interior of the supporting tube 24E of the bottom wall portion 24A, and are held so as to rotate freely around the axes thereof.

Worm wheels 34A are formed coaxially at the outer peripheral portions of the wheel drives 34 at the axial direction (vehicle longitudinal direction) intermediate portions thereof. The worm wheels 34A are meshed-together with (are engaged with) the worms 32 of the motors 30. Therefore, due to the motors 30 being driven and the worms 32 being rotated, the worm wheels 34A are rotated, and the wheel drives 34 are rotated.

A predetermined number (four in the present embodiment) of meshing claws 34B that serve as engaging portions are formed at the inner peripheral portions of the wheel drives 34 at the vehicle rear sides of the worm wheels 34A. The predetermined number of meshing claws 34B are disposed at uniform intervals in the peripheral directions of the wheel drives 34. The meshing claws 34B extend-out toward the vehicle rear side and are elastic. The distal ends (the vehicle rear side ends) of the meshing claws 34B project-out toward the radial direction inner sides of the wheel drives 34.

Rod drives 36 that are substantially cylindrical and serve as moving members are inserted coaxially within the wheel drives 34. The rod drives 36 project-out toward the vehicle rear side from the covering wall 16C. One of the rod drives 36 is disposed above (or below) the central axis of the supporting wall 16B of the visor body 16, and the other rod drive 36 is disposed at the vehicle transverse direction outer side (or the vehicle transverse direction inner side) of the central axis of the supporting wall 16B.

The portions other than the distal end portions (the vehicle rear side end portions) of the rod drives 36 are made to be screws 36A. Distal ends of the meshing claws 34B of the wheel drives 34 are meshed-together with (are engaged with) the screws 36A. The distal end portions of the rod drives 36 are substantially spherical.

A mirror body 38 that serves as a viewing means is accommodated within the accommodating wall 16A of the visor body 16. The entire periphery of and the vehicle front side of the mirror body 38 are covered by the accommodating wall 16A.

A mirror 40 that is shaped as a substantially rectangular plate and serves as a viewing portion is provided at the vehicle rear side portion of the mirror body 38. The obverse of the mirror 40 is exposed at the vehicle rear side of the visor body 16. A mirror surface 40A (the obverse of a reflecting layer at the reverse side) of the mirror 40 faces toward the vehicle rear side. Viewing of the vehicle rear side by a vehicle occupant of the vehicle (the driver in particular) is assisted by the mirror 40.

A mirror holder 42, that is substantially rectangular plate shaped and is made of resin and serves as a sliding body, is provided at the vehicle front side portion of the mirror body 38. The entire periphery of the mirror 40 is fixed to (held at) the entire periphery of the mirror holder 42, and the mirror holder 42 covers the vehicle front side (the reverse side) of the mirror 40.

A mounting wall 42A that is substantially tubular and serves as a mounting portion is formed at the mirror holder 42 at the vehicle front side of the central position (the center of gravity position) of the mirror 40. The mounting wall 42A is disposed coaxially with the supporting wall 16B of the visor body 16. The mounting wall 42A is substantially shaped as a spherical wall, and the inner diameter dimension of the mounting wall 42A gradually becomes larger toward the vehicle rear side. The holding sphere 22A of the holding tube 22 of the visor body 16 is fit-in the interior of the mounting wall 42A. Due thereto, the mounting wall 42A is held tiltably and slidably at the holding surface 22B of the holding sphere 22A.

A sliding wall 42B that is substantially tubular and serves as a sliding portion is provided integrally with the vehicle front side of the mirror holder 42. The sliding wall 42B is disposed coaxially with the supporting wall 16B of the visor body 16. The sliding wall 42B is shaped as a spherical wall, and the outer diameter dimension of the sliding wall 42B gradually becomes larger toward the vehicle rear side. The outer peripheral surface of the sliding wall 42B abuts the projecting end surfaces 16H of the supporting projections 16G at the supporting wall 16B. The sliding wall 42B is tiltably and slidably supported at the projecting end surfaces 16H of the supporting projections 16G.

A pair of rotating walls 42C that are substantially tubular and serve as rotating portions are formed at the mirror holder 42 at the radial direction inner side of the sliding wall 42B. One of the rotating walls 42C is disposed above (or below) the central axis of the supporting wall 16B of the visor body 16. The other rotating wall 42C is disposed at the vehicle transverse direction outer side (or the vehicle transverse direction inner side) of the central axis of the supporting wall 16B. The central axes of the rotating walls 42C are disposed parallel to the central axis of the supporting wall 16B of the visor body 16, and the rotating walls 42C are substantially shaped as spherical walls. The inner diameter dimensions of the rotating walls 42C gradually become larger from the vehicle longitudinal direction both end sides toward the vehicle longitudinal direction central sides thereof.

The distal end portions of the rod drives 36 at the mirror surface adjusting mechanism 28 are fit into and held within the rotating walls 42C. The rotating walls 42C permit rotation with respect to the distal end portions of the rod drives 36, and regulate rotation around the axes of the rod drives 36. Therefore, as described above, at the mirror surface adjusting mechanism 28, due to the wheel drives 34 (including the meshing claws 34B) being rotated, the meshed-together positions of the distal ends of the meshing claws 34B with the screws 36A of the rod drives 36 are displaced, and the rod drives 36 are moved (slid) in the vehicle longitudinal direction (the axial directions).

Operation of the present embodiment is described next.

In the door mirror device 10 for a vehicle that has the above-described structure, due to the retracting mechanism 12 being operated electrically, the rotating body 12B is rotated with respect to the stand 12A, and the mirror body 38 (including the visor 14 (the visor body 16 and the visor cover 20), the reinforcement 24 and the mirror surface adjusting mechanism 28) is rotated integrally with the rotating body 12B. Due thereto, the mirror body 38 is retracted due to the mirror body 38 being rotated toward the vehicle rear side and vehicle transverse direction inner side. Moreover, the mirror body 38 is set erect (unfolded, returned) due to the mirror body 38 being rotated toward the vehicle front side and the vehicle transverse direction outer side.

Further, due to electrical operation of the mirror surface adjusting mechanism 28, the motors 30 are driven and the worms 32 are rotated, and, due thereto, the wheel drives 34 are rotated, and the rod drives 36 are moved in the vehicle longitudinal direction. Therefore, the mirror body 38 (the mirror 40 and the mirror holder 42) is tilted in at least one of the vertical direction and the vehicle transverse direction by the rod drives 36, and, due thereto, the angle of the mirror surface 40A of the mirror 40 (the viewing direction of the vehicle occupant that the mirror 40 assists) is adjusted in at least one of the vertical direction and the vehicle transverse direction. Further, at the time when the mirror body 38 is tilted, the mounting wall 42A of the mirror body 38 is held (supported) while being slid on the holding surface 22B of the holding sphere 22A of the holding tube 22 of the visor body 16, and the sliding wall 42B of the mirror body 38 is supported while being slid on the projecting end surfaces 16H of the supporting projections 16G at the supporting wall 16B of the visor body 16.

By the way, at the time of assembling the door mirror device 10 for a vehicle, the visor body 16 is moved from the vehicle front side with respect to the mirror body 38, and the mirror body 38 is accommodated within the accommodating wall 16A of the visor body 16. At this time, the holding sphere 22A of the visor body 16 is fit-in the interior of the mounting wall 42A of the mirror holder 42 from the vehicle front side.

Moreover, the retracting mechanism 12 is assembled to (placed at) the visor body 16 from the vehicle front side.

Further, the mirror surface adjusting mechanism 28 (the motors 30, the worms 32, the wheel drives 34 and the rod drives 36) are assembled to (placed at) the covering wall 16C of the visor body 16 from the vehicle front side. At this time, the distal end portions of the rod drives 36 are fit-in the interiors of the rotating walls 42C of the mirror holder 42 from the vehicle front side.

Next, the reinforcement 24 is assembled to the visor body 16 and the rotating body 12B from the vehicle front side by the first screw 18A, the second screw 18B, the third screw 18C, the fourth screw 18D and the fifth screw 18E.

Finally, the visor cover 20 (the upper cover 20A and the lower cover 20B) are assembled to the visor body 16 and the reinforcement 24 from the vehicle front side by the sixth screw 18F.

Here, the covering wall 16C interior at the supporting wall 16B interior opens toward the vehicle front side of the visor body 16 (the side opposite from the mirror body 38), and the reinforcement 24 is assembled to the vehicle front side of the visor body 16, and the bottom wall portion 24A of the reinforcement 24 covers the vehicle front side of the mirror surface adjusting mechanism 28 that is at the covering wall 16C interior. Therefore, the mirror surface adjusting mechanism 28 can be assembled into the covering wall 16C interior (the supporting wall 16B interior) from the vehicle front side of the visor body 16, in a state in which the reinforcement 24 is not assembled to the vehicle front side of the visor body 16.

Due thereto, the mirror surface adjusting mechanism 28 also can be assembled to the visor body 16 from the side at which the visor cover 20 is assembled to the visor body 16 (the vehicle front side). Accordingly, differently than in a case in which the mirror surface adjusting mechanism 28 is assembled to the visor body 16 from the vehicle rear side (the mirror body 38 side), the number of assembly processes of the door mirror device 10 for a vehicle can be reduced, the assembly line for the door mirror device 10 for a vehicle can be simplified, the assemblability can be improved, and the cost can be reduced. Moreover, at the time of assembling the door mirror device 10 for a vehicle, damage to the visor cover 20 can be suppressed, and the defect rate of the door mirror device 10 for a vehicle can be reduced.

Moreover, the retracting mechanism 12 and the reinforcement 24 also can be assembled to the visor body 16 from the side at which the mirror surface adjusting mechanism 28 and the visor cover 20 are assembled to the visor body 16 (the vehicle front side). Accordingly, differently than in a case in which at least one of the retracting mechanism 12 and the reinforcement 24 is assembled to the visor body 16 from the vehicle rear side, as ever, the number of assembly processes of the door mirror device 10 for a vehicle can be reduced, the assembly line for the door mirror device 10 for a vehicle can be simplified, the assemblability can be improved, and the cost can be reduced. Moreover, as ever, at the time of assembling the door mirror device 10 for a vehicle, damage to the visor cover 20 can be suppressed, and the defect rate of the door mirror device 10 for a vehicle can be reduced.

Further, the supporting wall 16B (the portion that slidably supports the sliding wall 42B of the mirror body 38) and the covering wall 16C (the portion that covers the vehicle rear side of the mirror surface adjusting mechanism 28) are provided at the visor body 16. Therefore, the number of parts can be reduced, the assemblability can be improved further, and the costs can be reduced further. Moreover, because the covering wall 16C supports the mirror body 38 via the mirror surface adjusting mechanism 28 (the wheel drives 34 and the rod drives 36), positional offset between the sliding wall 42B of the mirror body 38 and the supporting wall 16B can be suppressed, and, at the time when the mirror surface adjusting mechanism 28 is operated, the sliding resistance between the sliding wall 42B and the supporting wall 16B can be stabilized, and tilting of the mirror body 38 can be stabilized. Moreover, because the covering wall 16C and the supporting wall 16B are made integral, penetration of foreign substances (e.g., water) into the covering wall 16C interior from the vehicle rear side of the visor body 16 via the accommodating wall 16A interior and the supporting wall 16B interior can be suppressed, and penetration of foreign substances into the mirror surface adjusting mechanism 28 (the motors 30 in particular) can be suppressed.

Moreover, the supporting wall 16B (the portion that slidably supports the sliding wall 42B of the mirror body 38) and the holding tube 22 (the portion that slidably supports the mounting wall 42A of the mirror body 38) are provided at the visor body 16. Therefore, the number of parts can be reduced, the assemblability can be improved further, and the costs can be reduced further. Moreover, the supporting wall 16B supports the sliding wall 42B of the mirror body 38, and the holding tube 22 supports the mounting wall 42A of the mirror body 38. Therefore, positional offset between the sliding wall 42B and the supporting wall 16B, and positional offset between the mounting wall 42A and the holding tube 22, can be suppressed, and, at the time when the mirror surface adjusting mechanism 28 is operated, the sliding resistance between the sliding wall 42B and the supporting wall 16B, and the sliding resistance between the mounting wall 42A and the holding tube 22, can be stabilized, and tilting of the mirror body 38 can be stabilized further.

Further, the accommodating wall 16A (the portion that accommodates the mirror body 38) and the holding tube 22 (the portion that slidably supports the mounting wall 42A of the mirror body 38) are provided at the visor body 16. Therefore, the number of parts can be reduced, the assemblability can be improved further, and the costs can be reduced further. Moreover, because the holding tube 22 supports the mounting wall 42A of the mirror body 38, positional offset between the accommodating wall 16A and the mirror body 38 can be suppressed, and the accommodated position of the mirror body 38 within the accommodating wall 16A can be stabilized.

Moreover, the holding surface 22B of the holding sphere 22A of the visor body 16 on which the mounting wall 42A of the mirror body 38 slides, and the projecting end surfaces 16H of the supporting projections 16G of the visor body 16 on which the sliding wall 42B of the mirror body 38 slides, are spherical surfaces that have the same center. Therefore, at the time when the mirror surface adjusting mechanism 28 is operated, the sliding resistance between the sliding wall 42B and the supporting wall 16B, and the sliding resistance between the mounting wall 42A and the holding tube 22, can be stabilized effectively, and tilting of the mirror body 38 can be stabilized effectively.

Moreover, the accommodating wall 16A (the portion that accommodates the mirror body 38) and the covering wall 16C (the portion that covers the vehicle rear side of the mirror surface adjusting mechanism 28) are provided at the visor body 16. Therefore, the number of parts can be reduced, the assemblability can be improved further, and the costs can be reduced further. Moreover, because the covering wall 16C supports the mirror body 38 via the mirror surface adjusting mechanism 28 (the wheel drives 34 and the rod drives 36), positional offset between the accommodating wall 16A and the mirror body 38 can be suppressed, and the accommodated position of the mirror body 38 within the accommodating wall 16A can be stabilized. Moreover, because the covering wall 16C is made integral with the accommodating wall 16A via the supporting wall 16B, penetration of foreign substances (e.g., water) into the covering wall 16C interior from the vehicle rear side of the visor body 16 via the accommodating wall 16A interior and the supporting wall 16B interior can be suppressed, and penetration of foreign substances into the mirror surface adjusting mechanism 28 (the motors 30 in particular) can be suppressed.

Further, the bottom wall portion 24A of the reinforcement 24 is fit-together with the fit-together tube 16F interior of the visor body 16, and the vehicle front side end of the supporting wall 16B of the visor body 16 is inserted in the concave portion 26 of the bottom wall portion 24A, and the outer peripheral surface of the supporting wall 16B is fit-together with the outer peripheral surface of the concave portion 26. Therefore, the path, over which foreign substances (e.g., water) penetrate into the covering wall 16C interior from the vehicle front side of the visor body 16 via the region between the bottom wall portion 24A and the fit-together tube 16F and the region between the bottom wall portion 24A and the supporting wall 16B, can be made to be long, and penetration of foreign substances into the covering wall 16C interior can be suppressed further, and penetration of foreign substances into the mirror surface adjusting mechanism 28 (the motors 30 in particular) can be suppressed further.

Moreover, the assembly plates 24B are formed at the radial direction outer side of the bottom wall portion 24A of the reinforcement 24, and the assembly plates 24B are fixed to the visor body 16 at the bottom wall portion 24A radial direction outer side of the wheel drives 34 of the mirror surface adjusting mechanism 28. Therefore, the bottom wall portion 24A (including the supporting tube 24E) can effectively limit movement of the wheel drives 34, and operation of the mirror surface adjusting mechanism 28 can be stabilized effectively.

Moreover, the limiting plates 16E of the visor body 16 are inserted in the limiting holes 24C of the bottom wall portion 24A, and movement of the bottom wall portion 24A in the peripheral direction and the radial direction with respect to the visor body 16 is limited. Therefore, the bottom wall portion 24A (including the supporting tube 24E) can more effectively limit movement of the wheel drives 34, and operation of the mirror surface adjusting mechanism 28 can be stabilized more effectively.

Note that, in the present embodiment, the supporting wall 16B is made integral with the covering wall 16C and the accommodating wall 16A. However, the supporting wall 16B may be made to be separate from at least one of the covering wall 16C and the accommodating wall 16A. Further, in a case in which the supporting wall 16B is made to be separate from the accommodating wall 16A, the bottom wall portion 24A (the closing-off portion) of the reinforcement 24 may be provided at the accommodating wall 16A.

Moreover, in the present embodiment, the holding tube 22 is made integral with the supporting wall 16B and the accommodating wall 16A. However, it suffices for the holding tube 22 to be made integral with at least one of the supporting wall 16B and the accommodating wall 16A.

Further, in the present embodiment, the mirror body 38 is made to be the viewing means. However, a camera that assists viewing by the vehicle occupant by capturing images may be made to be the viewing means.

Moreover, in the present embodiment, the door mirror device 10 for a vehicle (the viewing device for a vehicle) is set at the outer side of a door of the vehicle. However, the viewing device for a vehicle may be set at another position of the vehicle.

The disclosures of Japanese Patent Application No. 2015-140643 and Japanese Patent Application No. 2015-140644 that were filed on July 14, 2015 are, in their entireties, incorporated by reference into the present specification.

### [Explanation of Reference Numerals]

10 door mirror device for vehicle (viewing device for vehicle)
- 12: retracting mechanism
- 16: visor body (supporting body, accommodating body)
- 16A: accommodating wall (accommodating portion)
- 16B: supporting wall (supporting portion)
- 16C: covering wall (covering portion)
- 16H: projecting end surface (sliding surface)
- 22: holding tube (central supporting portion)
- 22B: holding surface (sliding surface)
- 24: reinforcement (reinforcing body)
- 28: mirror surface adjusting mechanism (operating mechanism)
- 38: mirror body (viewing means)

## Claims

1. A viewing device for a vehicle, comprising:
viewing means for assisting viewing by a vehicle occupant;
an operating mechanism which, by being operated, tilts the viewing means; and
a supporting body including a supporting portion, which slidably supports the viewing means at a viewing means outer peripheral side of the operating mechanism, and a covering portion that covers a viewing means side of the operating mechanism.

2. A viewing device for a vehicle, comprising:
viewing means for assisting viewing by a vehicle occupant;
an operating mechanism which, by being operated, tilts the viewing means; and
a supporting body that includes a supporting portion, which slidably supports the viewing means at a viewing means outer peripheral side of the operating mechanism, and that enables assembly of the operating mechanism from a side opposite from the viewing means.

3. The viewing device for a vehicle of Claim 1 or Claim 2, further comprising a retracting mechanism that is assembled to the supporting body from a side opposite from the viewing means, and by which, by being operated, the viewing means is retracted.

4. The viewing device for a vehicle of any one of Claim 1 through Claim 3, further comprising a reinforcing body that is assembled to the supporting body from a side opposite from the viewing means, and that reinforces the supporting body.

5. The viewing device for a vehicle of any one of Claim 1 through Claim 4, further comprising a central supporting portion that is provided at the supporting body, and that slidably supports the viewing means at a central side of the viewing means.

6. The viewing device for a vehicle of any one of Claim 1 through Claim 5, further comprising a central supporting portion that is provided integrally with an accommodating portion that accommodates the viewing means, and that slidably supports the viewing means at a central side of the viewing means.

7. The viewing device for a vehicle of Claim 5 or Claim 6, wherein a sliding surface, on which the viewing means slides, of the supporting portion and a sliding surface, on which the viewing means slides, of the central supporting portion are spherical surfaces having a same center.

8. A viewing device for a vehicle, comprising:
viewing means for assisting viewing by a vehicle occupant;
an operating mechanism which, by being operated, tilts the viewing means; and
an accommodating body including an accommodating portion that accommodates the viewing means, and a covering portion that covers a viewing means side of the operating mechanism.

9. A viewing device for a vehicle, comprising:
viewing means for assisting viewing by a vehicle occupant;
an operating mechanism which, by being operated, tilts the viewing means; and
an accommodating body that accommodates the viewing means, and that enables assembly of the operating mechanism from a side opposite from the viewing means.

10. The viewing device for a vehicle of Claim 8 or Claim 9, further comprising a retracting mechanism that is assembled to the accommodating body from a side opposite from the viewing means, and by which, by being operated, the viewing means is retracted.

11. The viewing device for a vehicle of any one of Claim 8 through Claim 10, further comprising a reinforcing body that is assembled to the accommodating body from a side opposite from the viewing means, and that reinforces the accommodating body.
